# EUROPÄISCHE PATENTSCHRIFT

(11) **EP 1 224 511 B1**
(45) Veröffentlichungstag und Bekanntmachung des Hinweises auf die Patenterteilung: **07.01.2004**
(21) Anmeldenummer: 00979504.8
(22) Anmeldetag: 19.10.2000
(51) Int. Cl.: G05B 19/23, G01D 5/244

(54) **SYSTEM UND VERFAHREN ZUR STEUERUNG EINER POSITIONIEREINRICHTUNG, INSBESONDERE VON STELLANTRIEBEN BEI WERKZEUGMASCHINEN, SOWIE PHASENMISCHVORRICHTUNG**
SYSTEM AND METHOD FOR CONTROLLING A POSITIONING DEVICE, IN PARTICULAR FOR A DEVICE PERTAINING TO A TOOL MACHINE, AND A PHASE BLENDING DEVICE
SYSTEME ET PROCEDE POUR COMMANDER UNE UNITE DE POSITIONNEMENT, NOTAMMENT DES MECANISMES DE COMMANDE DANS DES MACHINES-OUTILS, ET DISPOSITIF DE MELANGE DE PHASES

(30) Priorität: 22.10.1999 DE 19950902
(43) Veröffentlichungstag der Anmeldung: 24.07.2002
(73) Patentinhaber: DS Technologie Werkzeugmaschinenbau GmbH, 41236 Mönchengladbach (DE)
(72) Erfinder: MIRBACH, Hermann, 41844 Wegberg (DE)
(74) Vertreter: Rehders, Jochen
(86) Internationale Anmeldenummer: PCT/EP2000/010274
(87) Internationale Veröffentlichungsnummer: WO 2001/031409

(56) Entgegenhaltungen:
- EP-A- 0 652 419
- WO-A-98/00921
- GB-A- 2 335 987
- US-A- 5 375 066
- US-A- 5 414 516

## Beschreibung

### Technisches Gebiet der Erfindung

Die Erfindung betrifft ein System und ein Verfahren zur Steuerung einer Positioniereinrichtung, insbesondere von Stellantrieben bei Werkzeugmaschinen, mit einer inkrementellen Positionsmeßeinrichtung mit Ausgangssignalen der Form sin ϕ₁, sin (ϕ₁ + p) und einer die Ausgangssignale in Steuersignale umsetzenden und damit die Positioniereinrichtung steuernden Steuereinheit Dabei ist p ein Winkel, um den die beiden Ausgangssignale phasenverschoben sind.

### Hintergrund der Erfindung

Bei Werkzeug-, Bearbeitungs- und Fertigungsmaschinen, aber auch bei verschiedenen Meß- und Prüfeinrichtungen ist es notwendig, ein Werkzeug oder einen Meßfühler relativ zu einem Werkstück oder einem zu prüfenden Teil automatisch zu positionieren. Aus Gründen der Einfachheit wird die Erfindung im folgenden immer am Beispiel der Positionierung eines Werkzeugs einer Werkzeugmaschine relativ zu einem Werkstück beschrieben, ohne daß die Erfindung jedoch auf diesen speziellen Anwendungsfall beschränkt wäre.

Zur Positionierung von Werkzeug und Werkstück sind die Werkzeuge bei modernen Werkzeugmaschinen in der Regel um fünf und mehr Achsen verfahr- und verschwenk- bzw. verdrehbar. Die Verfahr- und Schwenk- bzw. Drehbewegungen werden von einer zentralen Steuereinheit, in der Regel einer sogenannten numerischen Steuerung (NC) gesteuert, wobei die Steuereinheit von einer Positionsmeßeinrichtung beim Verfahren, Verschwenken oder Verdrehen fortlaufend Informationen über die ausgeführten Positionsänderungen erhält.

Bei den Positionsmeßeinrichtungen haben sich die sogenannten inkrementellen (zählenden) Positionsmeßeinrichtungen besonders bewährt. Nach Art der Ausgangssignale unterscheidet man dabei zwischen Meßeinrichtungen mit rechteckförmigen (und damit quasi digitalisierten) Ausgangssignalen (wobei die Signale in der Regel in Form eines Spannungsimpulses übermittelt werden) und solchen mit sinusförmigen (also analogen) Ausgangssignalen. Die Einrichtungen mit rechteckförmigen Ausgangssignalen zeichnen sich durch eine verhältnismäßig einfache Signalverarbeitung aus, wobei die Positionsabweichungen in der Regel ± 3% der Signalperiode betragen.

Sollen mit einer relativ kurzen Abtastzeit von z.B. 250 µs Verfahrgeschwindigkeiten von wenigstens 0,01 m/min realisiert werden, und soll aus Genauigkeitsgründen eine Änderung von mindestens einem Meßschritt pro Abtastzyklus stattfinden, so wird ein Meßschritt von nur 0,04 µm benötigt. Mit diesem Meßschritt ergibt sich z. B. bei 60 m/min eine Schrittfrequenz von 60 m/(60s*0,04 µm) = 25 MHz. Um dabei den Schaltungsaufwand in der Folgeelektronik gering zu halten, sind Eingangsfrequenzen kleiner als 1 MHz anzustreben. Für solche hohen Verfahrgeschwindigkeiten und sehr kleinen Meßschritte haben sich inkrementelle Pasitionsmeßeinrichtungen mit sinusförmigen Ausgangssignalen bestens bewährt, die mit einer relativen Positionsabweichung innerhalb einer Signalperiode für Antriebe mit digitaler Drehzahlregelung von weniger als 1% der jeweiligen Signalperiode des Meßgerätes sogar noch genauer sind als Meßeinrichtungen mit rechteckförmigen Ausgangssignalen.

Nun besteht das Problem, daß auf Grund von Nichtlinearitäten, thermischen Ausdehnungen, Schwingungen etc. Werkstück und Werkzeug sich tatsächlich in einer Position relativ zueinander befinden, die von der Position abweicht, die die Steuereinheit auf Grund der ihr von der Meßeinrichtung übermittelten Signale errechnet hat. Obwohl solche Abweichungen oft nur sehr gering sind, können sie in den Fällen, in denen extrem geringe Fertigungstoleranzen bei der Bearbeitung eines Werkstücks vorgegeben sind, dazu führen, daß das komplette Werkstück unbrauchbar wird. Dabei sind die unter bestimmten Bedingungen und/oder in bestimmten Positionen auftretenden Abweichungen oftmals im vorhinein kalkulier- bzw. meßbar.

Aus der DE 32 01005 C2 ist ein System zur Steuerung einer Positioniereinrichtung, insbesondere von Stellantrieben bei Werkzeugmaschinen bekannt, das eine inkrementellen Positionsmeßeinrichtung mit Ausgangssignalen der Form sin ϕ₁, sin (ϕ₁ ± p), wobei p ein Winkel ist, um den die beiden Ausgangssignale phasenverschoben sind, eine die Ausgangssignale in Steuersignale umsetzende und damit eine Positioniereinrichtung steuernde Steuereinheit und Mittel zum Einmischen eines Korrekturwinkels ϕ₂ in die Ausgangssignale umfaßt, wobei die Mittel derart zwischen die Positionsmeßeinrichtung und die Steuereinheit geschaltet sind, daß die Ausgangssignale die Form sin (ϕ₁ ± ϕ₂), sin (ϕ₁ ± ϕ₂ ± p) erhalten, bevor sie von der Steuereinheit in Steuersignale umgesetzt werden.

Dieses System erlaubt allerdings nicht die Berücksichtigung beliebiger Korrekturwinkel und kann damit nicht zur Steuerung der Positioniereinrichtung benutzt werden.

Aus derDE 32 01005 C2 ist zwingend vorgesehen, daß neben einem Maßstab Korrekturspuren angebracht werden, die zur Erfassung von Korrektursignalen abgetastet werden müssen. Gemäß der Lehre dieser Druckschrift werden also zwingend immer wenigstens zwei "Maßstäbe" abgetastet, nämlich einmal der eigentliche Maßstab und die zugehörige Korrekturspur. Die Korrekturwinkel sind also nicht beliebig, sondern ergeben sich ausschließlich aus den Abtastwerten der Korrekturspur.

Aus der GB 2 335 987 A1 ist eine Methode zum Kalibrieren und Kompensieren von Fehlern, die sich im Meßsystem selbst finden, bekannt Ziel ist es dabei, "short range errors" zu eliminieren, wobei es sich bei diesen Fehlern auch um "phase errors" handeln kann, die zunächst mittels FFT-Analyse ermittelt werden müssen und dann zur Korrektur verwendet werden. Durch das Kalibrieren bzw. Kompensieren der Fehler kann aber nicht eine Maschine im Sinne der vorliegenden Anmeldung gesteuert werden.

Aus der WO 98/00921 ist ein Winkelgeber für Drosselventile bekannt. In der zum Geber gehörenden Auswerteeinheit wird durch Mischen und Multiplizieren von Harmonischen des eingespeisten Erregersignals der Winkel des Gebers bestimmt. Diese Auswerteeinheit ist aber kein Phasenmischer im Sinne der vorliegenden Anmeldung.

Aus der Druckschrift US 5,414,516 ist ein Verfahren zur hochauflösenden Auswertung des Winkels von zwei sinusförmigen Meßsignalen, die jeweils um 90° phasenversetzt sind, bekannt. Die aktive Steuerung einer Positioniereinrichtung durch Einmischen eines Korrekturwinkels wird von dieser Druckschrift nicht gelehrt.

Aus der Druckschrift EP 0 652 419 A1 ist ein Verfahren zur Kompensation von Phasenfehlern bei Meßsystemen bekannt, wobei vorab oder auch online ermittelte Winkelfehler, unabhängig vom gerade ermittelten Winkel des Meßsystems, bei der Weiterverarbeitung durch Winkeladdition berücksichtigt werden können. Das Verfahren erlaubt aber nicht, beliebige Winkel ins Meßsystem einzumischen. Vielmehr werden dabei nur Fehler innerhalb einer Teilungsperiode korrigiert.

Aus der Druckschrift US 5,375,066 ist eine Vorrichtung zum Einmischen von Korrekturenwinkeln bekannt, die lediglich bei digitalen bzw. Meßsystemen mit TTL-Pegel und nicht bei analogen, sinusförmigen Meßsystemsignalen, die phasenverschoben sind, angewandt werden kann.

### Offenbarung der Erfindung

Davon ausgehend liegt der Erfindung die Aufgabe zugrunde, eine Vorrichtung und ein Verfahren zur Steuerung einer Positioniereinrichtung anzugeben, bei welcher bestimmte Positionsabweichungen automatisch berücksichtigt werden können, ohne daß hierzu Veränderungen an den an sich bewährten Steuereinheiten bzw. deren Betriebsweise vorgenommen werden müßten. Insbesondere sollen beliebige Korrekturwinkel berücksichtigt werden können, so daß diese theoretisch auch zur Steuerung der Positioniereinrichtung benutzt werden können.

Die Aufgabe wird von einem System zur Steuerung einer Positioniereinrichtung, insbesondere von Stellantrieben bei Werkzeugmaschinen, mit einer inkrementellen Positionsmeßeinrichtung mit Ausgangssignalen der Form sin ϕ₁, sin (ϕ₁ ± p), wobei p ein Winkel ist, um den die beiden Ausgangssignale phasenverschoben sind, einer die Ausgangssignale in Steuersignale umsetzenden und damit eine Positionieneinrichtung steuernden Steuereinheit und Mitteln zum Einmischen eines Korrekturwinkels ϕ₂ in die Ausgangssignale, wobei die Mittel derart zwischen die Positionsmeßeinrichtung und die Steuereinheit geschaltet sind, daß die Ausgangssignals die Form sin (ϕ₁ ± ϕ₂), sin (ϕ₁ ± ϕ₂ ± p) erhalten, bevor sie von der Steuereinheit in Steuersignale umgesetzt werden, wobei das System dadurch gekennzeichnet ist, daß die Mittel zum Einmischen eines Korrekturwinkels auf wenigstens eine frei programmierbare Korrekturwinkeltabelle mit Werten der zu bestimmten Zuständen x zu berücksichtigenden Korrekturwinkeln ϕ₂ oder deren trigonometrischen Entsprechungen zugreifen kann.

Die Erfindung beruht also auf dem Grundgedanken, die von der jeweiligen Positionsmeßeinrichtung gelieferten Positionssignale auf ihrem Weg zur Steuereinheit "abzufangen", nach vorgegebenen Kriterien zu verändern und die veränderten. Positionssignale der Steuereinheit zuzuleiten, um auf diese Weise Abweichungen zwischen der gemessenen und der tatsächlichen Position des zu steuernden Werkzeugs o.dgl. zu korrigieren. Der dabei einzumischende Korrekturwinkel ϕ₂ kann - je nach Art der zu steuemden Positioniereinrichtung und in Abhängigkeit von den jeweiligen Besonderheiten - auch weit größer als 2π bzw. als 360° sein, so daß durch den Korrekturwinkel nicht nur Abweichungen innerhalb eines Schrittintervalls, sondern auch Abweichungen beliebiger Größe korrigiert werden können. Der Korrekturwinkel kann damit theoretisch sogar zur Steuerung der Positioniereinrichtung benutzt werden.

Der Korrekturwinkel selbst kann auf unterschiedlichste, teilweise bekannte Weisen, die nicht Gegenstand dieser Anmeldung sind, bestimmt werden. Beispielsweise kann der Korrekturwinkel ϕ₂ bei der Unrund-Bearbeitung eine Funktion f(x, y) der gemessenen Unrundheit der zu bearbeitenden Oberfläche sein. Bei der volumetrischen Kompensation kann ϕ₂ eine Funktion einer oder mehrerer anderer Funktionen sein, z. B. eine Funktion der Temperatur, der Achsenausdehnung etc.
Die Erfindung hat den großen Vorteil, daß aufgrund der Tatsache, daß an der Steuereinheit selbst überhaupt keine Eingriffe vorzunehmen sind, auch bereits fertige Maschinen problemlos nachgerüstet bzw. auf das neue Verfahren zur Steuerung umgestellt werden können.

Bei einer bevorzugten Ausführungsform der Erfindung umfassen die Mittel zum Einmischen eines Korrekturwinkels ϕ₂ einen analogen Phasenmischer. Dieser kann auf wenigstens eine, vorzugsweise auf zwei frei programmierbare Korrekturwinkeltabelle mit Werten der zu bestimmten Zuständen x zu berücksichtigenden Korrekturwinkeln ϕ₂ oder deren trigonometrischen Entsprechungen zugreifen, so daß also der Korrekturwinkel ϕ₂ kein konstanter Wert, sondern vielmehr eine von einem oder mehreren Parametern - wie z.B. Druck. Temperatur, absolute Position etc. - abhängige Funktion f(x) des Zustandes x ist, also ϕ₂ = f(x). Auch können bestimmten Ausgangssignalen der Positionsmeßeinrichtung und bestimmten Intervallen von ϕ₁ bestimmte Korrekturwinkel ϕ₂ zugeordnet sein. So kann z.B. vorgesehen sein, die von 0 bis 2π bzw. 0° bis 360° reichenden Werte von ϕ₁ in 1024 Intervalle aufzuteilen und jedem Intervall einen Wert ϕ₂ zuzuordnen.

Bei einer vorteilhaften Weiterbildung der Erfindung, die sich durch besonders schnelles Ermitteln der der Steuereinheit zuzuleitenden korrigierten Werte sin (ϕ₁ ± ϕ₂), sin (ϕ₁ ± ϕ₂ ± p) auszeichnet, verfügt der analoge Phasenmischer über vier multiplizierende A/D-Wandler, wobei jeweils ein Wandler zur Erzeugung eines der folgenden vier Werte geschaltet ist sinϕ₁*cosϕ₂, cosϕ₁*sinϕ₂, sin(ϕ₁± p)*cosϕ₂, cos(ϕ₁±p)*sinϕ₂. Beträgt die Phasenverschiebung p zwischen den Ausgangssignalen genau 90°, was üblicherweise zutrifft, entspricht sin (ϕ₁±p) gerade cos ϕ₁ und die Ausgangssignale besitzen also die Form sin ϕ₁, cos ϕ₁, so können die Wandler zur Bildung zur automatischen Bildung der Werte cosϕ₁*sinϕ₂, sinϕ₁*sinϕ₂, sinϕ₁*cosϕ₂ und cosϕ₁*cosϕ₂ geschaltet sein.

Als zweckmäßig hat es sich erwiesen, wenn der analoge Phasenmischer über zwei Addierverstärker verfügt, welche aus den Ausgangswerten jeweils zweier A/D-Wandler jeweils einen der Werte sin (ϕ₁ ± ϕ₂), sin (ϕ₁ ± ϕ₂ ± p) bilden. Die Addierverstärker erlauben es dann vorteilhaft, die vom Phasenmischer zur Steuereinheit geleiteten Ausgangssignale ggf. unter Zwischenschaltung eines Filters so zu formen, daß sie in ihrer Charakteristik exakt den von der Positionsmeßeinrichtung gelieferten Ausgangssignalen entsprechen, auf deren Empfang die Steuereinheit üblicherweise eingestellt und optimiert ist.

Alternativ kann auch vorgesehen sein, däß die Mittel zum Einmischen des Korrekturwinkels ϕ₂ wenigstens einen A/D-Wandler zur Umwandlung der analogen Ausgangssignale der Form sin ϕ₁, sin (ϕ₁ ± p) der inkrementellen Positionsmeßeinrichtung in digitale Signale und eine digitale Recheneinheit zur Berechnung der Werte sin (ϕ₁±ϕ₂), sin (ϕ₁±p±ϕ₂) umfassen, wobei die digitale Recheneinheit auf dann wiederum auf wenigstens eine, vorzugsweise auf zwei frei programmierbare Korrekturwinkeltabellen zugreifen kann, in welchen die Werte der zu bestimmten Zuständen x zu berücksichtigenden Korrekturwinkel ϕ₂ oder deren trigonometrischen Entsprechungen, insbesondere die Werte sin ϕ₂ und sin (ϕ₂ ± p) gespeichert sind.

Die genannte Aufgabe wird ferner gelöst von einem Verfahren zur Steuerung einer Positioniereinrichtung, insbesondere von Stellantrieben bei Werkzeugmaschinen, wobei von einer inkrementellen Positionsmeßeinrichtung Ausgangssignale der Form sinϕ₁, sin(ϕ₁±p) erzeugt und einer Steuereinheit zugeleitet werden, welche die Ausgangssignale in die eine Positioniereinrichtung steuernden Steuersignale umsetzt, und wobei den Ausgangssignalen vor der Zuleitung zur Steuereinheit Korrekturwinkel ϕ₂ derart beigemischt werden, daß die Ausgangssignale die Form sin(ϕ₁±ϕ₂), sin(ϕ₁±ϕ₂±p) erhalten, wobei das Verfahren dadurch gekennzeichnet, daß die beizumischenden Korrekturwinkel oder deren trigonometrische Entsprechungen aus wenigstens einer frei programmierbaren Korrekturwinkeltabelle mit Werten der zu bestimmten Zuständen x zu berücksichtigenden Korrekturwinkeln ϕ₂ oder deren trigonometrischen Entsprechungen ausgelesen werden.

Dabei kann das Verfahren so durchgeführt werden, daß das Beimischen des Korrekturwinkels ϕ₂ bei der Umwandlung der analogen Ausgangssignale der Form sinϕ₁, sin(ϕ₁±p) der inkrementellen Positionsmeßeinrichtung in digitale Signale vorzugsweise unter Verwendung eines oder mehrerer multiplizierender A/D-Wandler erfolgt, wobei diese Vorgehensweise eine besonders schnelle und auch für hohe Eingangsfrequenzen geeignete Signalverarbeitung gewährleistet.

Alternativ kann das Verfahren z.B. so durchgeführt werden, daß das Beimischen des Korrekturwinkels ϕ₂ nach der Umwandlung der analogen Ausgangssignale der Form sinϕ₁, sin(ϕ₁±p) der inkrementellen Positionsmeßeinrichtung in digitale Signale vorzugsweise unter Verwendung einer digitalen Recheneinheit erfolgt.

Zur Realisierung des erfindungsgemäßen Systems und Verfahrens wird eine Phasenmischvorrichtung (nachfolgend kurz Phasenmischer genannt) zur Einmischung eines Korrekturwinkels ϕ₂ in die sinusförmigen Ausgangssignale sin ϕ₁, sin (ϕ₁+p) inkrementeller Positionsmeßeinrichtungen vorgeschlagen, welche Mittel zum Einlesen der Ausgangssignale sin ϕ₁, sin (ϕ₁ ± p) aus der Positionsmeßeinrichtung, eine Speichereinrichtung zum Speichern wenigstens einer Tabelle mit im Zustand x zu berücksichtigenden Korrekturwinkeln ϕ₂ oder trigonometrischen Entsprechungen dieser Winkel, vier multiplizierenden A/D-Wandlern zur Bildung von gemäß den Additionstheoremen für die Summen/Differenzen zweier Winkel zu berücksichtigenden Termen sowie zwei mit jeweils zwei der multiplizierenden A/D-Wandlern verbundenen Addierverstärkem zur Bildung der Werte sin (ϕ₁ ± ϕ₂) und sin (ϕ₁ ± ϕ₂ ± p) aus den von den multiplizierenden A/D-Wandlem gelieferten Werten umfaßt.

Alternativ kann die Phasenmischvorrichtung auch so ausgebildet sein, daß sie Mittel zum Einlesen analoger sinusförmiger Ausgangssignale sinϕ₁, sin(ϕ₁+p) einer inkrementellen Positionsmeßeinrichtung, eine Speichereinrichtung zum Speichern wenigstens einer Tabelle mit im Zustand x zu berücksichtigenden Korrekturwinkeln ϕ₂ oder trigonometrischen Entsprechungen dieser Winkel, wenigstens einen A/D-Wandler zur Umwandlung der sinusförmigen analogen Ausgangssignale in digitale Signale und eine digitale Recheneinheit zur Bildung der Werte sin(ϕ₁±ϕ₂) und sin(ϕ±p₁±ϕ₂) bzw. cos. (ϕ₁±ϕ₂) aus den von dem wenigstens einen A/D-Wandler gelieferten digitalen Signalen umfaßt.

Weitere Einzelheiten und Vorteile der Erfindung ergeben sich aus der nachfolgenden Beschreibung einiger Ausführungsbeispiele in Verbindung mit der Zeichnung. Es zeigen:
- Fig. 1: eine Prinzipskizze zur Erläuterung der Problemstellung, also der Einmischung eines Korrekturwinkels ϕ₂ in Ausgangssignale der Form sin ϕ₁, cos ϕ₁ (bei einer Phasenverschiebung p von 90°),
- Fig. 2 und 3: ein Blockschaltbild eines Phasenmischgatters mit einem analogen Phasenmischer,
- Fig. 4: ein stark vereinfachtes Prinzipschaltbild der Einbindung des analogen Phasenmischers in ein Geberinterface,
- Fig. 5: ein Schaltbild des analogen Phasenmischer mit vier multiplizierenden A/D-Wandlem und zwei Addierverstärkern,
- Fig. 6: ein Schaltbild der Ansteuerung des Phasenmischers,
- Fig. 7: ein zur Begrenzung der maximal möglichen analogen Ausgangsfrequenz dem Phasenmischer nachgeschaltetes Tiefpaßfilter,
- Fig. 8: ein Prinzipschaltbild der Ausgangstufe zur Verstärkung des tiefpaßgefilterten Analogsignals,
- Fig. 9: ein Prinzipschaltbild der Geberauswertung mittels MIP-Bausteinen,
- Fig. 10: eine Prinzipskizze zur Verdeutlichung des typischen Signalverlaufs der interpolierten Signalfolgen und
- Fig. 11: eine schematische Darstellung des Grundprinzips bei der Erzeugung von Referenzsignalen

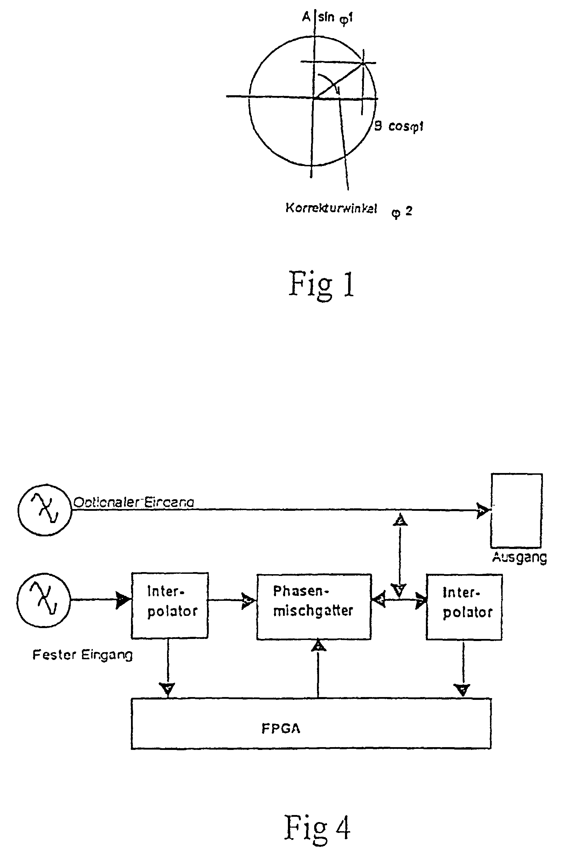

In der Figur 1 ist schematisch dargestellt, wie sich die von einer an sich bekannten und daher hier nicht weiter dargestellten Positionsmeßeinrichtung gelieferten sinusförmigen Ausgangssignale verhalten, wobei der Phasenversatz zwischen den beiden Ausgangssignalen exakt 90° beträgt, so daß sich also das eine Signal sinus- das andere Signal cosinusförmig ändert. Bei den bekannten Steuerungen würde nun aus den Werten sinϕ₁ und cosϕ₁ die Position z.B. eines Werkzeugs an einer Werkzeugmaschine bestimmt. Wie oben ausgeführt, besteht dabei das Problem, daß auf Grund verschiedener Umstände die gemessene Position nicht mit der tatsächlichen übereinstimmt.

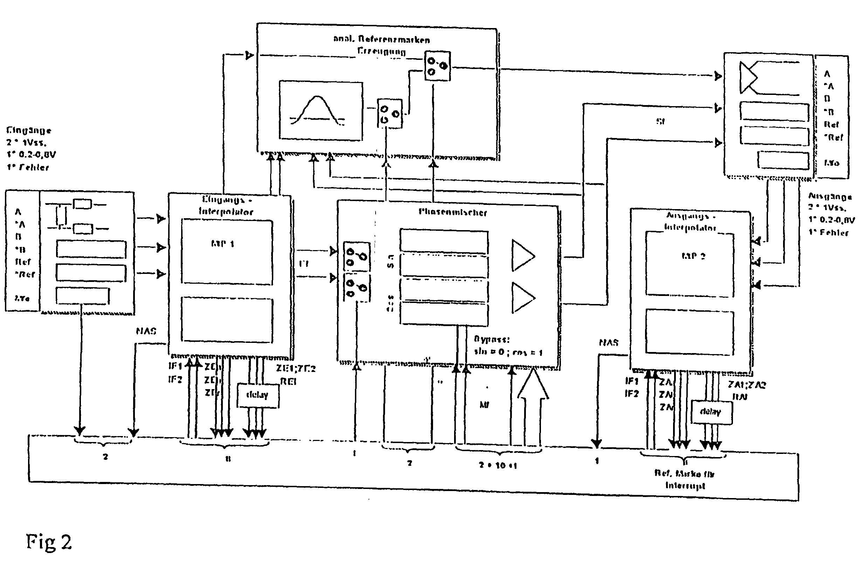

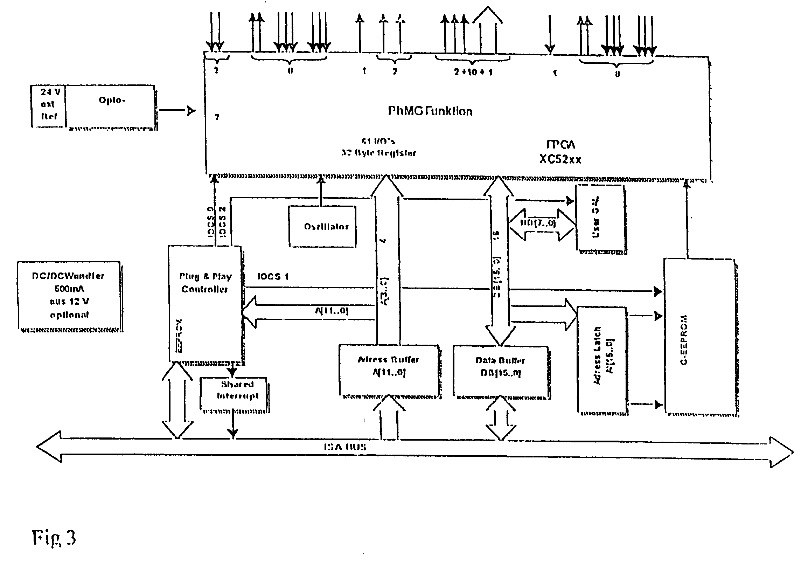

Während bei digitalen Positionsmeßeinrichtungen bei bekannten Fehlern relativ einfach Korrekturwerte zu den gemessenen Werten addiert oder subtrahiert werden können, ist dies bei den prinzipiell genaueren Meßsystemen mit sinusförmigen Ausgangssignalen nicht ohne Weiteres möglich. Erfindungsgemäß ist nun vorgesehen, Abweichungen durch Einmischen eines Korrekturwinkels ϕ₂ in die Ausgangssignale zu korrigieren, so daß sich also die von einer Steuereinheit zur Steuerung einer Positioniereinrichtung benutzten Werte sinϕ₁ und cosϕ₁ gemäß den Additionstheoremen für die Summe oder Differenz zweier Winkel ändern. Das Blockschaltbild eines zum nichttrivialen Einmischen eines solchen Korrekturwinkels ϕ₂ dienenden Phasenmischgatters mit einem analogen Phasenmischer zeigen die Figuren 2 und 3, wobei die Figur 3 die Figur 2 nicht maßstäblich fortsetzt.

Das in den Figuren 2 und 3 gezeigte Phasenmischgatter gliedert sich in folgende Bereiche:
- Eingangsschaltung für Geber inklusive Fehlerdekodierung und externem 24 VoltSignal, wobei optional vorgesehen sein kann, daß ein nicht-potential-getrennter AC-DCWandler das angeschlossene Meßsystem mit Spannung versorgt,
- analoger Phasenmischer und analoge Referenzsignalbildung,
- Digitalisierung der sinusförmigen Eingangs-Ausgangssignale,
- Ausgangsschaltung als Gebernachbildung für nachfolgende Steuerungen,
- FPGA (Field Programmable Gate Array) mit Oszillator, wobei in dieser frei programmierbaren Hardware die eigentlichen Phasenmischgatterfunktionen realisiert sind,
- Plug & Play Controller, wobei dieser Baustein als Bindglied zum ISA-BUS die Adressdekodierung des Phasenmischgatters sowie die Interruptfähigkeit liefert und das Phasenmischgatter durch die P & P- Fähigkeit auch für moderne, zukünftige Boards mit neuen BIOS-Versionen und Betriebssystemen geeignet ist und die Konfiguration in einem internen EEPROM liegt,
- Daten- und Adressbuffer zum Entkoppeln der Karte von ISA-BUS,
- ein die Bit-Map des FPGA-Bausteins enthaltenes Flash-EPROM, dessen Inhalt nach dem Einschalten automatisch innerhalb weniger Millisekunden ins FPGA übertragen wird, worauf das FPGA funktionstüchtig ist.

Dabei besteht die Hauptfunktion des gezeigten Phasenmischgatters darin, Meßsystemsignale zu "verfälschen", nämlich der nachfolgenden Steuerung durch Einmischen einer gezielten Anzahl von Weginkrementen eine andere Positionsinformation zu übermitteln, als von der eigentlichen Positionsmeßeinrichtung ermittelt. Dieser Mischvorgang kann für unterschiedlichste Maschinen und Vorrichtungen verwendet werden, insbesondere bei der sogenannten volumetrischen Kompensation, der Unrundbearbeitung und der Temperaturkompensation.

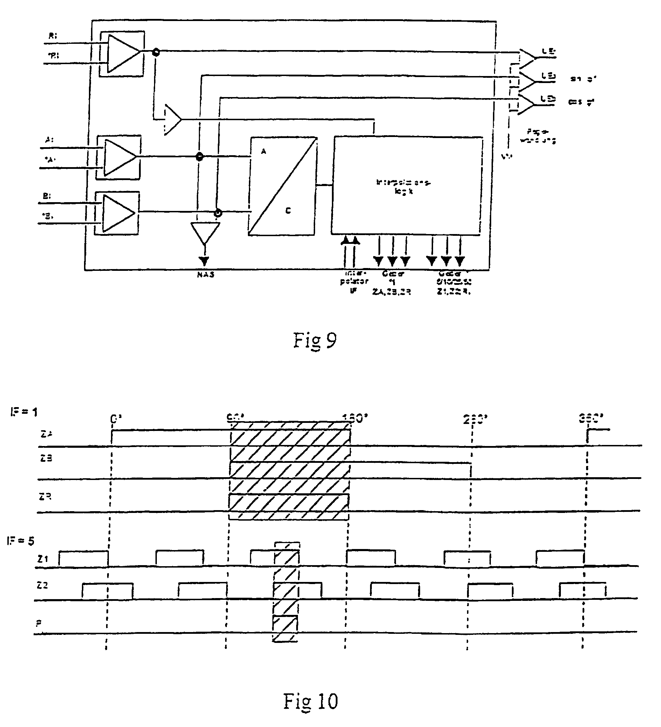

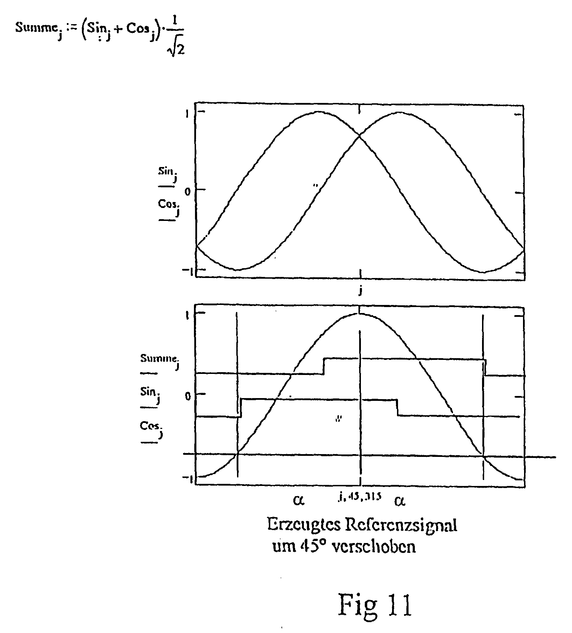

Das in den Figuren 2 und 3 gezeigte Phasenmischgatter ist in den Fällen, in denen ein Meßsystem ohne eigenen Nullimpuls benutzt werden muß, in der Lage, ein sinusförmiges Referenzsignal aus den Sinus-Cosinus-Signalen des Gebers zu erzeugen, wobei dieser Vorgang durch einen externen Referenzschalter initiiert und in das nächstmögliche analoge Signalraster eingebaut wird (vgl. Fig. 11). Wie in Figur 10 gezeigt, liegen die durch den Interpolator erzeugten Referenzmarken entsprechend den Regeln für digitale Meßsysteme genau im Raster der Wegsignale, wobei dies sowohl für die Signale für das Teilerverhältnis von 1 als auch für die Signale mit interpolierten Signalfolgen gilt.

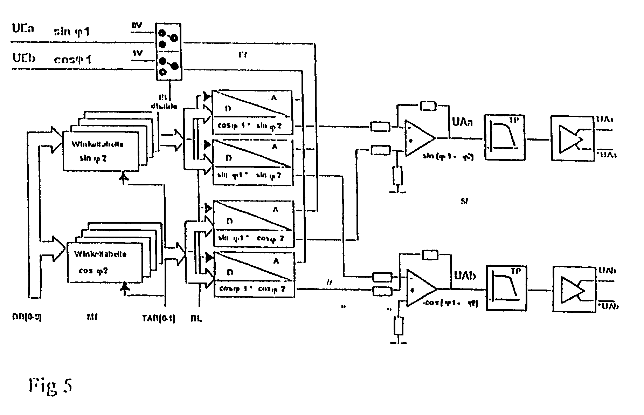

Die Figur 4 zeigt ein Prinzipschaltbild eines Geberinterfaces, das aus zwei Gebereingängen mit Interpolatoren, von denen einer optional als zweiter Gebereingang verwendet werden kann, besteht. Ein nachgebildeter Geberausgang kann entweder die Eingangssignale des optionalen Eingangs oder die im Phasenmischgatter erzeugten Gebersignale zur nachfolgenden Steuerung weiterleiten. Mit dem zweiten Interpolator wird die Summe aus Mischsignal und Gebereingang getrennt erfaßt und dem FPGA zugeführt.

Kernstück des erfindungsgemäßen Systems bildet ein analoger Phasenmischer, in dem die analogen Signale der Positionsmeßeinrichtung mit dem Winkel ϕ₁ um einen Winkel ϕ₂ mit definierter Frequenz verschoben werden, wobei dies für beide Werte sinϕ₁ und sin (ϕ₁+ p) in gleicher Weise erfolgt. Da die Phasenverschiebung p zwischen den beiden Signalen in der Regel exakt 90° beträgt, entspricht das Signal sin (ϕ₁+ p) dem Wert cosϕ₁. Die Erfindung erlaubt es, je nach Anwendungsfall den Winkel ϕ₁ um einen Korrekturwinkel ϕ₂ zu erhöhen oder zu vermindern. Bei der in Figur 5 gezeigten Schaltung wurde davon ausgegangen, daß vom Wert vom Wert ϕ₁ der Korrekturwinkel ϕ₂ gezogen werden soll. Demzufolge muß die Schaltung also automatisch die Ausgangssignale sinϕ₁, cosϕ₁ der Positionsmeßeinrichtung, die die Eingangssignale des Phasenmischers bilden, in die der hier nicht weiter gezeigten Steuereinheit zuzuleitenden Ausgangssignale sin (ϕ₁ - ϕ₂) und cos (ϕ ₁ - ϕ₂) umwandeln. Dies geschieht über die Beziehungen sin(ϕ_{1 -} ϕ₂ ) = sinϕ₁ *cosϕ₂-cosϕ₁*sinϕ₂ und cos (ϕ₁ - ϕ₂) = cosϕ₁*cosϕ₂ +sinϕ₁ *sinϕ_{2 .} Dabei werden die einzelnen Multiplikationsterme in vier Stufen erzeugt. Die zu 0 V symmetrischen Eingangssignale bilden den Winkel ϕ₁. Die Winkel ϕ₂ des Mischvorgangs werden durch Sinus-Cosinus-Tabellen erzeugt. Angesteuert werden diese Tabellen über EPROMS vom FPGA und der darin erzeugten "Mischfrequenz". Die Auflösung beträgt z.B. 10 Bit für einen Vollkreis. Vier multiplizierende A/DWandler bilden die einzelnen Stufen der Einzelresultate, die dann durch Addierverstärker verrechnet werden. Die gezeigte Schaltung ist voll statisch, so daß vorteilhaft Zwischenresultate erhalten bleiben.

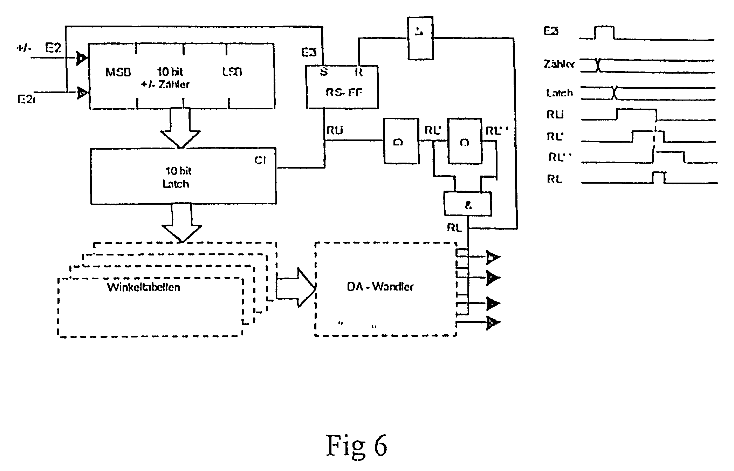

Die Ansteuerung des in Figur 5 gezeigten Phasenmischers erfolgt wie in Figur 6 gezeigt. Dabei werden die in der Mischwinkelerzeugung generierten Impulse E2+/und E2i in einem bidirektionalen Pufferzähler von in diesem Ausführungsbeispiel 10 Bit erfaßt. Diese 10 Bit repräsentieren einen Kreis mit 1024 Teilwinkeln, dem jeder ein Wert in den Sinus-Cosinus-EPROM-Tabellen zugeordnet ist. Mit jedem neuen Impuls E2i wird eine Sequenz angestoßen, mit der der neue Winkelwert über die EPROM-Tabellen in die A/D-Wandler übertragen wird. Möchte man verschiedene Kreisauflösungen erhalten, so daß auch mit hohen Abtastfrequenzen gearbeitet werden kann, können vorteilhaft mehrere Tabellen in den Kreisauflösungen 10 Bit (= 2π/1024), 9 Bit (=2p/512), 8 Bit (=2p/256) und 7 Bit (=2π/128) realisiert werden.

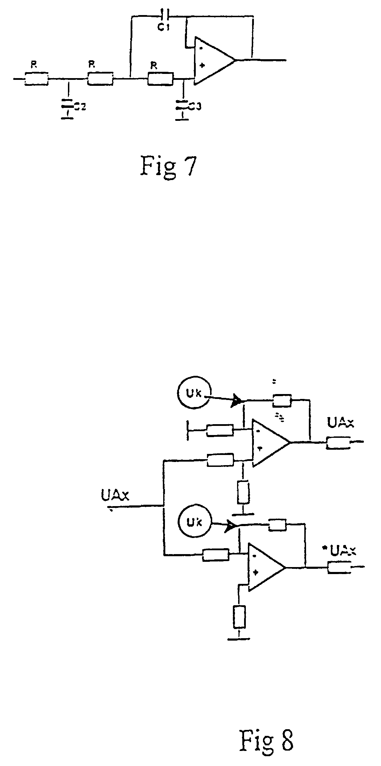

Die Figur 7 zeigt einen Tiefpaßfilter, und zwar ein dreipoliges Besselfilter, mit dem es vorteilhaft möglich ist, die maximal möglichen analogen Ausgangsfrequenzen des Phasenmischers zu begrenzen. Die Grenzfrequenz beträgt ca. 300 kHz.

In der Figur 8 ist eine Ausgangsstufe gezeigt, die das Analogsignal aus den internen Verarbeitungsstufen des Phasenmischers verstärkt und das invertierte Signal mit den gleichen Signalspezifikationen wie die beim Phasenmischer eingehenden Ausgangssignale der Positionsmeßeinrichtung besitzt. Durch eine Korrekturspannung wird der Nullpunkt der analogen Signalpegel wieder auf den Normalpegel zwischen 0 und 5 Volt angehoben, wodurch vorteilhaft erreicht wird, daß die nachgeschaltete Steuereinheit keinen Unterschied zu einem direkten Meßsystemausgang feststellt.

Die Auswertung des analogen Meßsystemsignals geschieht mittels Interpolatorbausteinen, wie in Figur 9 gezeigt. Dabei sind die Bausteine in der Lage, den durch die Sinus-und Cosinussignale gebildeten Kreis in gleichmäßige Winkelsegmente zu zerlegen und so eine wählbare Multiplikation der Gebersignale bis zum Faktor 50 zu erreichen. Die erzeugten Signale liegen in digitaler Form vor und sind Gray kodiert, entsprechend einschrittigem Code. Der Baustein liefert parallel zueinander die Signale *1 und die über zwei Eingänge wählbaren interpolierten Signale.

Im Rahmen des Erfindungsgedankens sind zahlreiche Abwandlungen und Weiterbildungen möglich, die sich z.B. auf die schaltungstechnische Realisation des Phasenmischers beziehen. Erfindungswesentlich ist jedenfalls das Beimischen eines beliebige Fehler korrigierenden und - falls gewünscht - auch bewußt zur Ansteuerung bestimmter Positionen dienenden Korrekturwinkels in die von einer Positionsmeßeinrichtung gelieferten Positionssignale auf ihrem Weg zur Steuereinheit, wobei das Beimischen vorzugsweise unter Anwendung der Additionstheoreme für die Addition zweier Winkel (sin(ϕ₁ ± ϕ₂) = sinϕ₁*cosϕ₂ ± cosϕ₁*sinϕ₂, cos(ϕ₁ ± ϕ₂) , = cosϕ₁*cosϕ₂ ± sin ϕ ₁ *cosϕ2) erfolgt.

## Patentansprüche

1. System zur Steuerung einer Positioniereinrichtung, insbesondere von Stellantrieben bei Werkzeugmaschinen, mit
- einer inkrementellen Positionsmeßeinrichtung mit Ausgangssignalen der Form sin ϕ₁, sin (ϕ₁ ± p), wobei p ein Winkel ist, um den die beiden Ausgangssignale phasenverschoben sind,
- einer die Ausgangssignale in Steuersignale umsetzenden und damit eine Positioniereinrichtung steuernden Steuereinheit und
- Mitteln zum Einmischen eines Korrekturwinkels ϕ₂ in die Ausgangssignale, wobei die Mittel derart zwischen die Positionsmeßeinrichtung und die Steuereinheit geschaltet sind, daß die Ausgangssignale die Form sin (ϕ₁ ± ϕ₂), sin (ϕ₁ ± ϕ₂ ± p) erhalten, bevor sie von der Steuereinheit in Steuersignale umgesetzt werden,
**dadurch gekennzeichnet, daß**
- die Mittel zum Einmischen eines Korrekturwinkels auf wenigstens eine frei programmierbare Korrekturwinkeltabelle mit Werten der zu bestimmten Zuständen x zu berücksichtigenden Korrekturwinkeln ϕ₂ oder deren trigonometrischen Entsprechungen zugreifen kann.

2. System nach Anspruch 1, **dadurch gekennzeichnet, daß** die Mittel zum Einmischen eines Korrekturwinkels auf zwei Korrekturwinkeltabellen zugreifen können, in welchen die zu bestimmten Zuständen x zu berücksichtigenden Werte sin ϕ₂ und sin (ϕ₂ ± p) gespeichert sind.

3. System nach Anspruch 1 oder 2, **dadurch gekennzeichnet, daß** die Mittel zum Einmischen eines Korrekturwinkels einen analogen Phasenmischer umfassen.

4. System nach Anspruch 3, **dadurch gekennzeichnet, daß** der analoge Phasenmischer über vier multiplizierende A/D-Wandler verfügt, wobei jeweils ein Wandler zur Erzeugung eines der folgenden vier Werte geschaltet ist: sinϕ₁*cosϕ₂, cosϕ₁*sinϕ₂, sin(ϕ₁±p)*cos(ϕ₂±p), cos(ϕ₁±p)*sin(ϕ₂±p).

5. System nach Anspruch 4, wobei die Phasenverschiebung p zwischen den Ausgangssignalen 90° beträgt, die Ausgangssignale also die Form sinϕ₁, cosϕ₁ besitzen, **dadurch gekennzeichnet, daß** der analoge Phasenmischer über vier multiplizierende A/D-Wandler verfügt, wobei jeweils ein Wandler zur Bildung eines der Werte cosϕ₁*sinϕ₂, sinϕ₁*sinϕ₂, sinϕ₁*cosϕ₂ und cosϕ₁*cosϕ₂ geschaltet ist.

6. System nach Anspruch 4 oder Anspruch 5, **dadurch gekennzeichnet, daß** der analoge Phasenmischer über zwei Addierverstärker verfügt, welche aus den Ausgangswerten jeweils zweier A/D-Wandler jeweils einen der Werte sin(ϕ₁±ϕ₂), sin(ϕ₁±ϕ₂±p) bzw. cos(ϕ₁±ϕ₂) bilden.

7. System nach Anspruch 1 oder 2, **dadurch gekennzeichnet, daß** Mittel zum Einmischen eines Korrekturwinkels wenigstens einen A/D-Wandler zur Umwandlung der analogen Ausgangssignale der Form sin ϕ₁, sin (ϕ₁ ± p) der inkrementellen Positionsmeßeinrichtung in digitale Signale und eine digitale Recheneinheit zur Berechnung der Werte sin (ϕ₁±ϕ₂), sin (ϕ₁±p±ϕ₂) umfassen.

8. Verfahren zur Steuerung einer Positioniereinrichtung, insbesondere von Stellantrieben bei Werkzeugmaschinen,
- wobei von einer inkrementellen Positionsmeßeinrichtung Ausgangssignale der Form sinϕ₁, sin(ϕ₁±p) erzeugt und einer Steuereinheit zugeleitet werden, welche die Ausgangssignale in die eine Positioniereinrichtung steuernden Steuersignale umsetzt, und
- wobei den Ausgangssignalen vor der Zuleitung zur Steuereinheit Korrekturwinkel ϕ₂ derart beigemischt werden, daß die Ausgangssignale die Form sin(ϕ₁±ϕ₂), sin(ϕ₁±ϕ₂±p) erhalten
**dadurch gekennzeichnet, daß**
- die beizumischenden Korrekturwinkel oder deren trigonometrische Entsprechungen aus wenigstens einer frei programmierbaren Korrekturwinkeltabelle mit Werten der zu bestimmten Zuständen x zu berücksichtigenden Korrekturwinkeln ϕ₂ oder deren trigonometrischen Entsprechungen ausgelesen werden.

9. Verfahren nach Anspruch 8, **dadurch gekennzeichnet, daß** die trigonometrischen Entsprechungen der beizumischenden Korrekturwinkel aus zwei Korrekturwinkeltabellen ausgelesen werden, in welchen die zu bestimmten Zuständen x zu berücksichtigenden Werte sin ϕ₂ und sin (ϕ₂ ± p) gespeichert sind.

10. Verfahren nach Anspruch 8 oder 9, **dadurch gekennzeichnet, daß** das Beimischen des Korrekturwinkels ϕ₂ bei der Umwandlung analoger Ausgangssignale der Form sinϕ₁, sin(ϕ₁±p) der inkrementellen Positionsmeßeinrichtung in digitale Signale vorzugsweise unter Verwendung eines oder mehrerer multiplizierender A/D-Wandler erfolgt.

11. Verfahren nach Anspruch 8 oder 9, **dadurch gekennzeichnet, daß** das Beimischen des Korrekturwinkels ϕ₂ nach der Umwandlung analoger Ausgangssignale der Form sinϕ₁, sin(ϕ₁±p) der inkrementellen Positionsmeßeinrichtung in digitale Signale vorzugsweise unter Verwendung einer digitalen Recheneinheit erfolgt.

## Claims

1. System for controlling a positioning device, in particular of actuators in machine tools, with
- an incremental position measuring device with output signals of the form sinϕ₁, sin(ϕ₁ ± p), wherein p is an angle by which the two output signals are displaced in phase,
- a control unit which converts the output signals into control signals and thus controls a positioning device and
- means for mixing a correction angle ϕ₂ into the output signals, wherein the means are connected between the position measuring device and the control unit such that the output signals are given the form sin(ϕ₁ ± ϕ₂), sin(ϕ₁ ± ϕ₂ ± p) before being converted into control signals by the control unit,
**characterised in that**
- the means for mixing in a correction angle can access at least one freely programmable correction angle table with values of the correction angles ϕ₂ which are to be taken into account for certain states x or the trigonometric equivalences thereof.

2. System according to Claim 1, **characterised in that** the means for mixing in a correction angle can access two correction angle tables in which the values sinϕ₂ and sin(ϕ₂ ± p) which are to be taken into account for certain states x are stored.

3. System according to Claim 1 or 2, **characterised in that** the means for mixing in a correction angle comprise an analogue phase mixer.

4. System according to Claim 3, **characterised in that** the analogue phase mixer has four multiplying A/D converters, wherein one converter is in each case connected to produce one of the following four values: sinϕ₁*cosϕ₂, cosϕ₁*sinϕ₂, sin(ϕ₁ ± p)*cos(ϕ₂ ± p), cos(ϕ₁ ± p)*sin(ϕ₂ ± p).

5. System according to Claim 4, wherein the phase shift p between the output signals is 90°, the output signals therefore have the form sinϕ₁, cosϕ₁, **characterised in that** the analogue phase mixer has four multiplying A/D converters, wherein one converter is in each case connected to form one of the values: cosϕ₁*sinϕ₂, sinϕ₁,*sinϕ₂, sinϕ₁*cosϕ₂ and cosϕ₁*cosϕ₂.

6. System according to Claim 4 or Claim 5, **characterised in that** the analogue phase mixer has two summing amplifiers which in each case form one of the values sin(ϕ₁ ± ϕ₂), sin(ϕ₁ ± ϕ₂ ± p) or cos(ϕ₁ ± ϕ₂) from the output values of each two A/D converters.

7. System according to Claim 1 or 2, **characterised in that** means for mixing in a correction signal comprise at least one A/D converter for converting the analogue output signals of the form sinϕ₁, sin(ϕ₁ ± p) of the incremental position measuring device into digital signals and a digital arithmetic unit for calculating the values sin(ϕ₁ ± ϕ₂), sin(ϕ₁ ± p_{,} ± ϕ₂).

8. Method for controlling a positioning device, in particular of actuators in machine tools,
- wherein output signals of the form sinϕ₁, sin(ϕ₁ ± p) are produced by an incremental position measuring device and fed to a control unit which converts the output signals into the control signals which control a positioning device, and
- wherein correction angles ϕ₂ are admixed with the output signals before they are fed to the control unit such that the output signals are given the form sin(ϕ₁ ± ϕ₂), sin(ϕ₁ ± ϕ₂ ± p),
**characterised in that**
- the correction angles which are to be admixed or the trigonometric equivalences thereof are read out of at least one freely programmable correction angle table with values of the correction angles ϕ₂ which are to be taken into.account for certain states x or the trigonometric equivalences thereof.

9. Method according to Claim 8, **characterised in that** the trigonometric equivalences of the correction angles which are to be admixed are read out of two correction angle tables in which the values sinϕ₂ and sin(ϕ₂ ± p) which are to be taken into account for certain states x are stored.

10. Method according to Claim 8 or 9, **characterised in that** the correction angle ϕ₂ is preferably admixed when converting analogue output signals of the form sinϕ₁, sin(ϕ₁ ± p_{,}) of the incremental position measuring device into digital signals with the use of one or more multiplying A/D converter(s).

11. Method according to Claim 8 or 9, **characterised in that** the correction angle ϕ₂ is preferably admixed after converting analogue output signals of the form sinϕ₁, sin(ϕ₁ ± p) of the incremental position measuring device into digital signals with the use of a digital arithmetic unit.

## Revendications

1. Système de commande d'un dispositif de positionnement, en particulier de mécanismes de réglage dans des machines-outils, comportant
- un dispositif incrémentiel de mesure de position avec des signaux de sortie de la forme sinϕ₁, sin (ϕ₁ ± p), p étant un angle de déphasage entre les deux signaux de sortie,
- une unité de commande convertissant les signaux de sortie en signaux de commande et commandant ainsi un dispositif de positionnement, et
- des moyens pour introduire un angle de correction ϕ₂ dans les signaux de sortie, les moyens étant couplés entre le dispositif de mesure de position et l'unité de commande de manière que les signaux de sortie prennent la forme sin (ϕ₁ ± ϕ₂), sin (ϕ₁ ± ϕ₂ ± p), avant d'être convertis par l'unité de commande en signaux de commande,
**caractérisé en ce que**
- les moyens d'introduction d'un angle de correction peuvent avoir accès à au moins un tableau d'angles de correction programmable librement avec des valeurs des angles de correction ϕ₂ à prendre en compte pour des états x déterminés, ou de leurs correspondances trigonométriques.

2. Système selon la revendication 1, **caractérisé en ce que** les moyens d'introduction d'un angle de correction peuvent avoir accès à deux tableaux d'angles de correction dans lesquels sont mémorisées les valeurs sin ϕ₂ et sin (ϕ₂ ± p) à prendre en compte pour des états x déterminés.

3. Système selon la revendication 1 ou 2, **caractérisé en ce que** les moyens d'introduction d'un angle de correction comprennent un mixeur de phase analogique.

4. Système selon la revendication 3, **caractérisé en ce que** le mixeur de phase analogique comporte quatre convertisseurs analogiques/numériques de multiplication, chaque convertisseur étant couplé pour produire respectivement l'une des quatre valeurs suivantes :sinϕ₁*cosϕ₂, cosϕ₁*sinϕ₂, sin (ϕ₁ ± p)*cos(ϕ₂ ± p), cos(ϕ₁ ± p)*sin(ϕ₂ ± p).

5. Système selon la revendication 4, dans lequel le déphasage p entre les signaux de sortie est de 90°, c'est-à-dire que les signaux de sortie ont la forme sin ϕ₁, cos ϕ₁, **caractérisé en ce que** le mixeur de phase analogique comporte quatre convertisseurs analogiques/numériques de multiplication, chaque convertisseur étant couplé pour former respectivement l'une des valeurs cosϕ₁*sinϕ₂, sinϕ₁*sinϕ₂, sinϕ₁*cosϕ₂, et cosϕ₁* cosϕ₂.

6. Système selon la revendication 4 ou 5, **caractérisé en ce que** le mixeur de phase analogique comporte deux amplificateurs d'addition qui forment à partir des valeurs de sortie de deux convertisseurs analogiques/numériques, respectivement l'une des valeurs sin (ϕ₁ ±ϕ₂), sin (ϕ₁ ± ϕ₂ ± p) ou cos (ϕ₁ ± ϕ₂).

7. Système selon la revendication 1 ou 2, **caractérisé en ce que** les moyens d'introduction d'un angle de correction comprennent au moins un convertisseur analogique/numérique pour la conversion des signaux de sortie analogiques de la forme sin ϕ₁, sin (ϕ₁ ± p) du dispositif incrémentiel de mesure de position en signaux numériques, ainsi qu'une unité de calcul numérique pour le calcul des valeurs sin (ϕ₁ ± ϕ₂), sin (ϕ₁ ± p ± ϕ₂).

8. Procédé de commande d'un dispositif de positionnement, en particulier de mécanismes de réglage dans des machines-outils, dans lequel
- des signaux de sortie de la forme sinϕ₁, sin (ϕ₁ ± p) sont produits par un dispositif incrémentiel de mesure de position, et acheminés vers une unité de commande qui convertit les signaux de sortie en signaux de commande commandant le dispositif de positionnement, et
- aux signaux de sortie sont ajoutés, avant leur acheminement à l'unité de commande, des angles de correction ϕ₂ de manière que les signaux de sortie prennent la forme sin (ϕ₁ ± ϕ₂), sin (ϕ₁ ± ϕ₂ ± p),
**caractérisé en ce que**
- les angles de correction à ajouter ou leurs correspondances trigonométriques sont extraits d'au moins un tableau d'angles de correction librement programmable avec des valeurs des angles de correction ϕ₂ à prendre en compte pour des états x déterminés, ou leurs correspondances trigonométriques.

9. Procédé selon la revendication 8, **caractérisé en ce que** les correspondances trigonométriques des angles de correction à ajouter sont extraites de deux tableaux d'angles de correction dans lesquels sont mémorisées les valeurs sin ϕ₂ et sin(ϕ₂ ± p) à prendre en compte pour des états x déterminés.

10. Procédé selon la revendication 8 ou 9, **caractérisé en ce que** l'ajout de l'angle de correction ϕ₂ lors de la conversion de signaux de sortie analogiques de forme sin (ϕ₁, sin (ϕ₁ ± p) du dispositif incrémentiel de mesure de position en signaux numériques, s'effectue de préférence par utilisation d'un ou de plusieurs convertisseurs analogiques/numériques de multiplication.

11. Procédé selon la revendication 8 ou 9, **caractérisé en ce que** l'ajout de l'angle de correction ϕ₂ après la conversion de signaux de sortie analogiques de forme sin ϕ₁, sin (ϕ₁ ± p) du dispositif incrémentiel de mesure de position en signaux numériques, s'effectue de préférence par utilisation d'une unité de calcul numérique.
